# EUROPÄISCHE PATENTSCHRIFT

(11) **EP 1 957 679 B1**
(45) Veröffentlichungstag und Bekanntmachung des Hinweises auf die Patenterteilung: **02.01.2019**
(21) Anmeldenummer: 06818843.2
(22) Anmeldetag: 27.11.2006
(51) Int. Cl.: C21B 13/00, C21B 13/14, C21C 5/52, B65G 17/00, B65G 17/12, F27D 3/00, F27B 3/18

(54) **BECHER- ODER ZELLENFÖRDERER, ANLAGENVERBUND UND VERFAHREN ZUM DESSEN BETRIEB**
BUCKET OR STAR FEEDER, COMBINED SYSTEM, AND METHOD FOR OPERATING SAID FEEDER
CHAÎNE À GODETS OU CONVOYEUR CELLULAIRE, SYSTÈME D'INSTALLATIONS ET PROCÉDÉ D'OPÉRATION DU CONVOYEUR

(30) Priorität: 07.12.2005 AT 19582005
(43) Veröffentlichungstag der Anmeldung: 20.08.2008
(73) Patentinhaber: Primetals Technologies Austria GmbH, 4031 Linz (AT)
(72) Erfinder: FISCHER, Harald, A-4020 Linz (AT); OBERNDORFER, Ernst, A-4020 Linz (AT); OFNER, Hanspeter, A-4055 Pucking (AT); SCHIFFER, Wilhelm, A-4050 Traun (AT)
(74) Vertreter: Metals@Linz
(86) Internationale Anmeldenummer: PCT/EP2006/011349
(87) Internationale Veröffentlichungsnummer: WO 2007/065582

(56) Entgegenhaltungen:
- EP-A1- 0 899 345
- WO-A-00/65102
- WO-A-2006/111579
- JP-A- 8 285 473
- JP-A- 53 133 521
- JP-A- 2006 105 544
- DATABASE WPI Week 197803 Derwent Publications Ltd., London, GB; AN 1978-05547A XP002434465 -& JP 52 145319 A (SUMITOMO SHIPBUILD KK) 3. Dezember 1977 (1977-12-03)
- DATABASE WPI Week 200559 Derwent Publications Ltd., London, GB; AN 2005-576937 XP002434466 -& JP 2005 231797 A (MITSUBISHI CHEM CORP) 2. September 2005 (2005-09-02)
- DUARTE P E ET AL: "HYTEMP DRI TRANSFER TO THIN SLAB CASTING FACILITY AT HYLSA" IRON AND STEEL ENGINEER, ASSOCIATION OF IRON AND STEEL ENGINEERS. PITTSBURGH, US, Bd. 73, Nr. 11, November 1996 (1996-11), Seiten 38-41, XP000641626 ISSN: 0021-1559

## Beschreibung

Die Erfindung betrifft einen Becher- oder Zellenförderer, mit Förderelementen zum Fördern von stückigem, insbesondere heißem, Fördergut, mit einer Abdeckung zur Abschirmung des Fördergutes.

Die Erfindung betrifft weiters einen Anlagenverbund mit einer Reduktionsanlage zur Reduktion von Oxiden in einem kontinuierlichen Prozess, insbesondere einer Direktreduktionsanlage, und einem Prozessaggregat zur Herstellung von flüssigem Metall, insbesondere einem Elektro-Stahlwerk, in einem diskontinuierlichen Prozess, wobei das Reduktionsprodukt aus der Reduktionsanlage dem Prozessaggregat zuführbar ist.

Die Erfindung betrifft ebenfalls ein Verfahren zum Betrieb einer Förderanlage, insbesondere einem Becher- oder Zellenförderer, mit Förderelementen zum Fördern von stückigem, insbesondere heißem, Fördergut, mit einer Abdeckung zur Abschirmung des Fördergutes

Aus dem Stand der Technik sind Förderanlagen zur Förderung von stückigem und heißem Fördergut zur Verarbeitung in metallurgischen Reaktoren bekannt.

Aus der US 6,214,086 ist z.B. eine Vorrichtung und ein Verfahren zur Versorgung etwa eines Schmelzprozesses mit heißem und kaltem direkt reduzierten Eisen (Direct Reduced Iron = DRI) zu entnehmen, wobei unter Schwerkraft das DRI von einer DRI-Erzeugungsanlage zu einem DRI-Verbraucher zur weiteren Verarbeitung verbracht wird. Nachteilig ist dabei, dass der gesamte Materialfluss nur unter Gravitation erfolgt, sodass Höhenunterschiede in der Anlage enge Grenzen festlegen.

Es ist auch z.B. aus US 2002/130448 bekannt Materialtransport von stückigem Gut aus einer Reduktionsanlage zu einer weiteren Verarbeitungsstufe mittels pneumatischer Förderung unter einem Schutzgas durchzuführen. Nachteilig ist dabei vor allem die Zunahme an Feinanteil durch Abrieb während des pneumatischen Transportes, der in einem weiteren Verarbeitungsschritt zu erheblichen Nachteilen führen kann und eine aufwändige Feinstoffbehandlung nach sich zieht.

Weiters sind aus der JP52145319A, der EP0899345A1 und JP2005231797 Förderanlagen zum Fördern von stückigem, heißem DRI mit einer gasdichten Abdeckung bekannt. Die Realisierung einer gasdichten Abdeckung ist technisch schwierig.

Ausgehend vom Stand der Technik ist es eine Aufgabe der Erfindung eine Förderanlage zur Verfügung zu stellen, die den Transport von stückigem Fördergut unter Schutzgas ermöglicht und die Nachteile aus dem Stand der Technik vermeidet. Die erfindungsgemäße Aufgabe wird durch die Förderanlage entsprechend dem kennzeichnenden Teil des Anspruchs 1 gelöst.

Die erfindungsgemäße Förderanlage gestattet die Förderung von stückigem Gut, wobei ein Kontakt des Fördergutes mit der Umgebungsatmosphäre durch Einleitung von Schutzgas vermieden wird, sodass keine ungewollten Reaktionen zwischen dem Fördergut und einer Umgebungsatmosphäre ablaufen können. Zur Abschirmung des Fördergutes wird eine abgedeckte Förderanlage mit Förderelementen vorgeschlagen, wobei innerhalb der Abdeckung die Förderelemente mit dem Fördergut unter einer Schutzgasatmosphäre gehalten werden können.

Nach der erfindungsgemäße Ausgestaltung der Förderanlage weist die Abdeckung seitliche und obere gasdichte Wände auf. Die Verteilerleitungen sind an den Innenseiten der seitlichen Abdeckungen angeordnet, wobei diese durch Leitungen, die die seitliche Abdeckung durchdringen versorgt werden.

Nach einer vorteilhaften Ausgestaltung der erfindungsgemäßen Förderanlage weist die Abdeckung eine Wärmeisolation zur Verringerung der Abkühlung des Fördergutes auf. Insbesondere bei heißem Fördergut, das aus einer vorhergehenden Prozessstufe noch im warmen Zustand gefördert bzw. weiterverarbeitet werden soll, ist es von Vorteil, wenn eine Isolation vorgesehen und Wärmeverluste gering gehalten werden können. Aufgrund der thermischen Aktivierung vieler Reaktionsabläufe ist es bei heißem Fördergut umso wichtiger, dass durch das Schutzgas unerwünschte bzw. nicht kontrollierbare chemische Reaktionen mit der Umgebungsatmosphäre verhindert werden.

Gemäß einer weiteren vorteilhaften Ausgestaltung der erfindungsgemäßen Förderanlage sind die Verteilerleitungen als gelochte oder perforierte Rohre, zur gleichmäßigen Verteilung des Schutzgases innerhalb der Abdeckung ausgeführt. Die gleichmäßige Spülung mit Schutzgas erlaubt die Einstellung einer ausreichend inerten Schutzgasatmosphäre, wobei die Menge an nötigem Schutzgas möglichst gering gehalten werden kann. Um dies zu erreichen ist eine sehr gleichmäßige Beaufschlagung mit Schutzgas notwendig, wobei insbesondere der Zutritt von Umbebungsgasen wie z.B. Luft verhindert werden soll. Der Einsatz von gelochten oder perforierten Rohren lässt eine Vielzahl von Eintragsöffnungen zu und somit eine sehr gleichmäßige Beaufschlagung mit Schutzgas.

Nach einer geeigneten Ausgestaltung der erfindungsgemäßen Förderanlage lässt eine Vielzahl an Verteilerleitungen an der Förderanlage zumindest eine abschnittsweise gesondert regelbare Versorgung mit zumindest einem Schutzgas zu. Durch diese Maßnahme ist eine deutlich bessere Beeinflussung der Spülung mit Schutzgas möglich, sodass bei einem geringen Schutzgasbedarf dennoch eine vollständige Abschirmung des Fördergutes sichergestellt werden kann.

Eine alternative Ausgestaltung der erfindungsgemäßen Förderanlage sieht vor, dass die Verteilerleitungen über abschnittsweise zusammengefasste Zuleitungen, welche jeweils mit separaten Versorgungsleitungen mit zumindest einer zentralen Schutzgasversorgung in Verbindung stehen, mit Schutzgas beaufschlagbar sind. Diese Anordnung gestattet es die Förderanlage abschnittsweise und lokal gezielt mit Schutzgas zu beaufschlagen. Über eine oder mehrere zentrale Schutzgasversorgungen werden über eine Vielzahl von Versorgungsleitungen die Abschnitte mit zumindest einem Schutzgas beaufschlagt. Es ist denkbar an unterschiedlichen Abschnitten verschiedene Mengen an Schutzgas einzubringen aber auch unterschiedliche Schutzgase oder auch Gemische von Schutzgasen. Somit kann die Förderanlage gemäß den Bedürfnissen mit Schutzgas gespült werden und dabei etwa entsprechend den Temperaturverhältnissen oder auch der Strömungssituation des Schutzgases in der Förderanlage dessen Menge angepasst werden. Die Verteilerrohre werden als Gruppe abschnittsweise zusammengefasst durch Zuleitungen mit Schutzgas versorgt. Üblicherweise können etwa 10 bis 25 Verteilerrohre in einem Abschnitt zusammengefasst werden. Die Anzahl der Abschnitte je Förderanlage kann entsprechend der Länge der Förderanlage gewählt werden, wobei sich 4 bis 8 Abschnitte als vorteilhaft erwiesen haben, um eine gezielte Versorgung mit Schutzgas sicherzustellen.

Gemäß der erfindungsgemäße Ausgestaltung der Förderanlage weisen die Verteilerleitungen an Ihren Ober- und Unterseiten Bohrungen und/oder Schlitze auf. Diese sind zur gerichteten Einleitung des Schutzgases parallel zur seitlichen Abdeckung nach oben und/oder nach unten gerichtet angeordnet. Es hat sich als nachteilig erwiesen, das Schutzgas direkt auf das Fördergut zu richten, da es dabei zu einer erheblichen Staubentwicklung kommen kann. Die gezielte gerichtete Einleitung des Schutzgases im Wesentlichen parallel zur seitlichen Abdeckung nach oben und nach unten gerichtet, stellt eine sichere Spülung des Bereichs innerhalb der Abdeckungen sicher. Durch die nach unten gerichtete Teilmenge an eingebrachtem Schutzgas, wird auch der Zutritt von Umgebungsatmosphäre unterbunden, da stets ein nach außen gerichteter Schutzgasstrom vorliegt.

Nach einer speziellen Ausführungsform der erfindungsgemäßen Förderanlage ist die Förderanlage geneigt, insbesondere in einem Winkel von 10° bis 50°, vorzugsweise in einem Winkel von 20° bis 35°, angeordnet. Durch diese Anordnung der Förderanlage können beträchtliche Höhenunterschiede überwunden werden, sodass auch anlagen- oder prozessbedingte Niveauunterschiede überwunden werden können. Aufgrund des Schutzgases ist es möglich, das Ansaugen von Umgebungsluft durch den bei heißem Fördergas auftretenden thermisch bedingten und nach oben gerichteten Gasstrom zu vermeiden und eindringende Umgebungsatmosphäre zu vermeiden, sodass auch bei größeren Neigungswinkeln ein Kontakt des Fördergutes mit der Umbebungsatmosphäre vermieden werden kann.

Nach der erfindungsgemäße Ausgestaltung der Förderanlage weist die Abdeckung gegenüber der Förderanlage Dichtspalte auf, die zur Ableitung von überschüssigem Schutzgas und zur Kühlung der Förderanlage vorgesehen sind. Um die Menge an nötigem Schutzgas möglichst gering zu halten, werden Dichtspalte vorgesehen, die einerseits den Austritt von Schutzgas reduzieren und andererseits den Eintritt von Umgebungsatmosphäre verhindern. Aufgrund der beweglichen Teile der Förderanlage und der rauen Betriebsbedingungen, wie z.B. der hohen thermischen Belastung, Stöße und Stäube, sind nicht berührende Abdichtungen vorteilhaft, um auch große Standzeiten ohne hohem Wartungsaufwand zu erzielen. Durch eine gezielte Menge an austretendem Schutzgas können bewegliche Teile oder auch die Tragekonstruktion die Förderanlage thermisch entlastet und eine Kühlwirkung erzielt werden. Die Schutzgasmenge kann dabei den Anforderungen gemäß gewählt werden, sodass einerseits eine sichere Abschirmung mit Schutzgas, eine ausreichende Kühlung und ein geringer Schutzgasverbrauch eingestellt werden kann.

Gemäß einer möglichen Ausgestaltung der erfindungsgemäßen Förderanlage sind über den Verteilerleitungen Drosselleisten im Bereich des oberen Endes der Förderelemente vorgesehen. Diese dienen dazu, das Eindringen von Umgebungsatmosphäre in das Förderelement zu verhindern, wobei ein enger Spalt zwischen den Drosselleisten und den Förderelementen vorliegt. Die Drosselleisten ermöglichen eine weitere Verminderung des benötigten Schutzgases, da durch die Drosselleisten ein geringerer Austausch an Gasmenge sichergestellt wird. Dabei wird die Spaltbreite so eng bemessen, dass möglichst wenig Gasaustausch erfolgt, wobei aus Sicherheitsgründen und um Berührungen zwischen dem Förderelementen und den Drosselleisten zu vermeiden ein Mindestspalt eingehalten werden muss. Die Spaltbreite muss aufgrund von thermischen Dehnungen und Bewegungen der Förderelemente festgelegt werden, wobei Spalte von 1 bis 10 cm, vorzugsweise 2 bis 4 cm eingehalten werden. Eine weitere Folge davon ist ein geringerer thermischer Verlust bei Förderung eines heißen Fördergutes.

Eine weitere mögliche Ausführungsform der erfindungsgemäßen Förderanlage sieht vor, dass zur gesteuerten Beschickung der Förderanlage ein Förderorgan, insbesondere ein Zellenradförderer oder eine Förderschnecke, vorgesehen ist, wobei vor Beschickung der Förderanlage mit Fördergut, das Förderorgans mit Schutzgas zur Entfernung von Luftsauerstoff spülbar ist. Um für einen weiteren Prozess eine konstante Fördermenge sicherzustellen zu können, ist eine gesteuerte Beschickung der Förderanlage wesentlich. Dazu sind z.B. Zellenradförderer bekannt, die eine volumetrisch konstante Menge an Fördergut aufbringen können. Um auch im Bereich des Förderorgans unkontrollierte Reaktionen des Fördergutes mit der Umgebungsatmosphäre zu vermeiden, wird die Spülung des Förderorgans bzw. dessen Förderzellen mit Schutzgas vorgesehen. Somit kann z.B. auch Restsauerstoff aus dem Förderorgan entfernt werden.

Gemäß einer besondere Ausführungsform der erfindungsgemäßen Förderanlage ist unmittelbar vor dem Förderorgan ein Absperrschieber und ein nachfolgendes Kugelventil zum Absperren des Förderorgans vorgesehen. Diese Maßnahme gestattet, dass das Förderorgan und die Förderanlage auch dann mit Schutzgas gespült werden können, wenn die Zufuhr von Fördergut unterbrochen ist.

Nach einer speziellen Ausgestaltung der erfindungsgemäßen Förderanlage umfasst das Förderorgan eine mit Schutzgas spülbare Förderschurre zur Aufgabe des Fördergutes auf die Förderanlage. Die konstante und gesteuerte Fördergutmenge aus dem Förderorgan wird über eine Schurre auf die Förderanlage aufgebracht, wobei eine Schutzgasspülung vorgesehen ist, die eine Schutzgasatmosphäre auch im Bereich der Schurre für das Fördergut sicherstellt. Durch diese Maßnahme kann das Fördergut ohne Unterbrechung unter Schutzgas geführt werden.

Gemäß einer vorteilhaften Ausgestaltung der erfindungsgemäßen Förderanlage sind im Bereich der Aufgabe- und/oder der Abwurfstellen der Förderanlage Absaugungseinrichtungen, insbesondere Injektorabsaugungen, mit separaten Staubhauben zur Absaugung von Stäuben vorgesehen, wobei in den Staubhauben Absaugrohre derart angeordnet sind, dass auch Falschluft zur Kühlung der abgesaugten Gase bzw. Stäube angesaugt werden kann. Bei der Aufgabe bzw. beim Abwurf von Fördergut kommt es aufgrund von unvermeidbaren Feinanteilen im Fördergut zu einer Staubentwicklung, die eine sehr erhebliche Umweltbelastung darstellen kann. Um diese Belastung für die Umgebung zu minimieren, sind Absaugungseinrichtungen vorgesehen, wobei diese neben den Stäuben auch Schutzgas absaugen. Um bei der Förderung von heißem Fördergut eine zu große thermische Belastung der Absaugungseinrichtungen zu vermeiden, sind die Absaughauben bzw. die Absaugrohre derart angeordnet, dass auch erhebliche Mengen an Falschluft angesaugt werden, um somit das Gemisch aus Schutzgas und Luft zu kühlen. Die Falschluft kann dabei einen Anteil von 10 bis 80% der gesamten Gasmenge ausmachen, wobei die Menge entsprechend der thermischen Situation gewählt wird.

Die erfindungsgemäße Aufgabe wird weiters durch den erfindungsgemäßen Anlagenverbund entsprechend dem kennzeichnenden Teil des Anspruchs 12 gelöst.

Anlagenverbunde setzen eine Abstimmung der Prozesse aufeinander voraus bzw. bedürfen einer Nutzung von Vorteilen, die sich z.B. aus der unmittelbaren Verarbeitung eines erzeugten Zwischenproduktes in einer weiteren Verfahrensstufe ergeben. Beispielsweise ist die Verarbeitung eines noch warmen oder heißen Produktes in einer nachfolgenden Prozessstufe vorteilhaft, weil somit ein bedeutsamer Vorteil bei den Energiekosten erzielbar ist. Aufgrund unterschiedlicher Prozessabläufe ist es oftmals nötig spezielle Prozessverbindungen und zugehörige Anlagen vorzusehen, um die Vorteile eines Anlagenverbundes nutzen zu können. Der erfindungsgemäße Anlagenverbund erlaubt die Nutzung von Synergien bei der Kopplung einer Reduktionsanlage mit einem Prozessaggregat zur Herstellung von flüssigem Metall, wie z.B. flüssigem Stahl. Bei Kopplung eines kontinuierlich ablaufenden Reduktionsverfahrens in einer Reduktionsanlage mit einem diskontinuierlich ablaufenden Prozess, wie z.B. einem Stahlerzeugungsverfahren in einem Elektro-Stahlwerk, ist es nötig Entkoppelungseinrichtungen, wie z.B. Puffereinrichtungen, vorzusehen. Die Puffereinrichtung kann das kontinuierlich erzeugte Zwischenprodukt sammeln, sodass es diskontinuierlich, wie z.B. schubweise, weiter verarbeitet werden kann. Neben dem Reduktionsprodukt können auch weitere Einsatzstoffe in das Prozessaggregat eingebracht werden.

Eine weitere sehr wesentliche Voraussetzung für die direkte Verarbeitung eines Reduktionsproduktes ist die anlagentechnische Anbindung der Anlagen aneinander. Oftmals müssen dabei erhebliche Höhenunterschiede überwunden werden, um eine Chargierung zu ermöglichen. Weiters ist es nötig, ein noch heißes Reduktionsprodukt soweit zu schützen, dass es zu keinen schädlichen und unkontrollierten Reaktionen mit der Umgebungsatmosphäre kommt, die z.B. zu einer Reduktion des bereits vorliegenden Metallisationsgrades führen können. Erfindungsgemäß wird daher die Reduktionsanlage mit dem Prozessaggregat zur Herstellung von flüssigem Metall über die erfindungsgemäße Fördereinrichtung gemäß einem der Ansprüche 1 bis 15 verbunden. Auf diese Weise kann sichergestellt werden, dass das Reduktionsprodukt sicher unter Schutzgas von der Reduktionsanlage in das Prozessaggregat zur Herstellung von flüssigem Metall verbracht werden kann.

Nach einer besonderen Ausführungsform des erfindungsgemäßen Anlagenverbundes umfasst die Puffereinrichtung zumindest einen Puffersilo. Die Zwischenspeicherung ermöglicht eine an das Prozessaggregat angepasste schubweise (Batch to Batch) Chargierung, wobei der Puffersilo hinsichtlich seiner Speicherkapazität an die Bedürfnisse der zu verbindenden Anlagen angepasst werden kann. Da die im Anlagenverbund gekoppelten Prozesse unterschiedliche Anforderungen hinsichtlich der Verfahren aufweisen, können durch eine zumindest teilweise Entkopplung der Verfahren dennoch optimale Betriebszustände unter Nutzung der Synergien der beiden Anlagenteile erreicht werden.

Gemäß einer vorteilhaften Ausgestaltung des erfindungsgemäßen Anlagenverbundes umfasst die Puffereinrichtung zwei Puffersilos zur wechselweisen Beschickung bzw. Entleerung. Die Anordnung zweier unabhängiger Aggregate gestattet eine noch bessere Beschickung des Prozessaggregates, wobei eine wechselweise Nutzung der Silos eine noch größere Flexibilität bei der Beschickung ermöglicht.

Nach einer besonders vorteilhaften Ausgestaltung des erfindungsgemäßen Anlagenverbundes weist die Puffereinrichtung eine Wärmeisolierung auf. Damit kann die zeitliche Entkopplung der Materialflüsse des Reduktionsproduktes besser gestaltet werden, wobei dennoch geringe thermische Verluste beim Reduktionsprodukt eingehalten werden können.

Eine besondere Ausführungsform des erfindungsgemäßen Anlagenverbundes sieht vor, dass die Puffereinrichtung zumindest ein Kugelventil und/oder einen Absperrschieber zum gasdichten Verschließen der Puffereinrichtung aufweist. Aufgrund der Notwendigkeit das Fördergut durch ein Schutzgas zu schützen, ist es nötig, auch in der Zwischenspeicherung einen Kontakt mit der Umgebungsatmosphäre zu vermeiden. Dazu hat es sich als einfache Maßnahme erwiesen, durch einen Absperrschieber und einen Kugelhahn den Eintritt von Umgebungsatmosphäre zu vermeiden. Der Absperrschieber übernimmt dabei eine Grobabsperrung, wobei Fördergut wirksam zurückgehalten wird, sodass der Kugelhahn frei von Fördergut gehalten wird. Der Kugelhahn bewirkt eine gasdichte Absperrung.

Gemäß einer alternativen Ausgestaltung des erfindungsgemäßen Anlagenverbundes weist die Puffereinrichtung Anschlüsse zur Spülung mit Schutzgas und/oder einem Kühlgas, insbesondere einem Inertgas, zur Kühlung in einem Störfall auf. Der Anschluss einer Schutzgaseinleitung ermöglicht die Spülung des gepufferten Fördermaterials. Dabei wird die Puffereinrichtung, wie z.B. ein Puffersilo mit Schutzgas gespült, wobei neben einer Schutzgaszuleitung auch eine Schutzgasableitung vorgesehen ist, sodass das Eindringen von Umgebungsatmosphäre wirksam verhindert werden kann. In Störfällen ist es nötig, das heiße gepufferte Fördermaterial zu kühlen, wobei ebenfalls mit einem Schutzgas gespült werden kann.

Eine spezielle Ausgestaltung des erfindungsgemäßen Anlagenverbundes sieht vor, dass an der Puffereinrichtung eine Aufgabevorrichtung für zusätzliche Einsatzstoffe vorgesehen ist. Diese Aufgabevorrichtung ermöglicht den gemeinsamen Einsatz des gepufferten Fördermaterials mit einem oder mehreren zugesetzten Einsatzstoffen, sodass keine zusätzlichen Einrichtungen nötig sind. Alternativ können jedoch auch zusätzliche Einrichtungen zum gesonderten Eintrag der Einsatzstoffe vorgesehen werden.

Gemäß einer möglichen Ausgestaltung des erfindungsgemäßen Anlagenverbundes weist die Puffereinrichtung zumindest eine kontinuierliche Gewichtsmesseinrichtung zur Erfassung des gepufferten Reduktionsproduktes und/oder der Einsatzstoffe auf. Es hat sich als einfache Lösung erwiesen, dass die Chargierung auf Basis des gemessenen Gewichtes des Fördergutes erfolgt. Insbesondere ist dabei vorteilhaft, dass die Chargierung in das Prozessaggregat entsprechend dem Gewicht gesteuert erfolgen kann, die Chargierung also einem vorgegebenen Gewicht-Zeit-Verlauf folgen kann. Neben dem Reduktionsprodukt können auch weitere Einsatzstoffe zusammen mit diesem oder auch wechselweise chargiert werden.

Nach einer alternativen Ausgestaltung des erfindungsgemäßen Anlagenverbundes weist die Puffereinrichtung zumindest ein Förderorgan zur geregelten Chargierung des Reduktionsproduktes und/oder der Einsatzstoffe in das Prozessaggregat auf. Das Förderorgan erlaubt eine zeitlich und mengenmäßig gesteuerte Chargierung in das Prozessaggregat, sodass ein optimaler Prozess eingehalten werden kann. Es ist dabei üblich die Beschickung nach vordefinierten Mengen-Zeit-Funktionen durchzuführen.

Gemäß einer speziellen Ausgestaltung des erfindungsgemäßen Anlagenverbundes ist vor der Förderanlage ein Austrag für das Reduktionsprodukt aus der Reduktionsanlage vorgesehen, wobei dieser mit einem Materialkühler zur Aufnahme und Kühlung des Reduktionsproduktes in Verbindung steht. Bei Störfällen oder auch bei speziellen Produktionszyklen, ist es nötig, einen Teil oder auch das gesamte Reduktionsprodukt auszuschleusen und einem Materialkühler zuzuführen.

Das nichterfindungsgemäße Verfahren zur Kopplung eines Reduktionsverfahrens und eines Verfahrens zur Herstellung von flüssigem Metall wird hiernach beschrieben.

Die Kopplung eines kontinuierlichen Prozesses, wie ein Reduktionsverfahren, mit einem diskontinuierlichen Prozess, wie einem Verfahren zur Herstellung von flüssigem Metall, macht eine Entkopplung der Prozessteile z. B. durch eine Zwischenspeicherung des Reduktionsproduktes nötig. Diese an sich nachteilige Maßnahme kann dadurch vorteilhaft genutzt werden, dass das Reduktionsprodukt und gegebenenfalls ein weiterer Einsatzstoff stets unter einer Schutzgasatmosphäre etwa mittels eines Zellenförderers gefördert bzw. gehalten werden. Damit ist sichergestellt, dass das Reduktionsprodukt nicht zusätzlich aufbereitet werden muss, sondern direkt verarbeitet bzw. chargiert werden kann. Durch die ununterbrochene Inertisierung in einer Schutzgasatmosphäre, kann das Reduktionsgut auch nach einer Zwischenspeicherung weiterverarbeitet werden, wobei auch heiße Reduktionsprodukte sicher vor ungewollten Reaktionen mit der Umgebungsatmosphäre geschützt werden. Wesentlich ist dabei die Tatsache, dass das Reduktionsgut stets unter Schutzgas gehalten wird, also während des gesamten Transportes, der Zwischenspeicherung bis zur Chargierung in das Prozessaggregat.

Gemäß dem nichterfindungsgemäßen Verfahren erfolgt die Zufuhr des Reduktionsproduktes und/oder der Einsatzstoffe aus der Puffereinrichtung in das Verfahren zur Herstellung eines flüssigen Metalls diskontinuierlich. Hierbei ist es üblich die Chargierung zur Optimierung des Prozesses entsprechend vordefinierter oder auch im Verfahren festgelegter Zeit-Mengen-Funktionen zu chargieren.

Gemäß dem nichterfindungsgemäßen Verfahren erfolgt der Eintrag des Reduktionsproduktes in das Verfahren zur Herstellung eines flüssigen Metalls geregelt und auf Basis einer kontinuierlichen Gewichtsmessung in der Puffereinrichtung. Der geregelte Eintrag in das Verfahren zur Herstellung eines flüssigen Metalls hat sich als effektive Maßnahme erwiesen, weil dabei auf Basis einfacher Messungen eine genaue Prozesssteuerung bzw. Verfolgung möglich ist.

Gemäß dem nichterfindungsgemäßen Verfahren wird das Reduktionsprodukt ohne Abkühlung zwischengespeichert und/oder dem Verfahren zur Herstellung eines flüssigen Metalls zugeführt. Durch diese Prozessführung ist es möglich thermische Verluste bzw. den Energieaufwand im Gesamtverfahren zu minimieren. Durch die Maßnahme einer Inertisierung des heißen Reduktionsproduktes ist es möglich eine Zwischenspeicherung des Reduktionsproduktes vorzunehmen, wobei unerwünschte Reaktionen, wie z.B. Oxidationsreaktionen sicher vermieden werden können.

Gemäß dem nichterfindungsgemäßen Verfahren ist das Reduktionsprodukt direktreduziertes Eisen (DRI). DRI zeichnet sich durch einen hohen Metallisationsgrad aus, also durch einen sehr hohen Metallanteil. Durch die hohe Reaktivität des heißen DRI ist eine Schutzgasatmosphäre Voraussetzung, insbesondere, wenn das DRI zwischengespeichert werden muss. Durch das erfindungsgemäße Verfahren kann hochwertiges DRI unter Ausnutzung der gespeicherten Wärme in einem Verfahren zur Herstellung von insbesondere flüssigem Stahl genutzt werden. Dadurch wird ein besonders effizientes Verfahren erreicht, das höchsten Qualitätsansprüchen genügt

Gemäß dem nichterfindungsgemäßen Verfahren wird ein Teil des Reduktionsproduktes, das nicht direkt im Verfahren zur Herstellung eines flüssigen Metalls verarbeitet werden kann, aus dem Verfahren zur Kopplung ausgetragen. Diese Maßnahme gestattet einerseits eine Anpassung von Produktionsmengen bei unterschiedlichen Kapazitäten zwischen den gekoppelten Verfahren bzw. eine Anpassung an spezielle Verfahrenszustände, wie z.B. bei Störungen im Verfahren zur Herstellung eines flüssigen Metalls.

Gemäß dem nichterfindungsgemäßen Verfahren wird das Reduktionsprodukt und gegebenenfalls der Einsatzstoff in zumindest zwei Puffereinrichtungen wechselweise zwischengespeichert bzw. dem Verfahren zur Herstellung eines flüssigen Metalls zugeführt. Durch die wechselweise Arbeitsweise kann der kontinuierliche Prozess vom diskontinuierlichen Prozessteil entkoppelt werden. Darüber hinaus bietet die Zwischenspeicherung auch eine Sicherheitsfunktion bei kurzzeitigen Störungen.

Die erfindungsgemäße Aufgabe wird auch durch das erfindungsgemäße Verfahren zum Betrieb einer Förderanlage entsprechend dem kennzeichnenden Teil des Anspruchs 22 gelöst. Die erfindungsgemäße Spülung des Raumes in der Förderanlage und innerhalb der Abdeckung mit Schutzgas, stellt sicher, dass es zu keinem Eindringen von Umgebungsatmosphäre und dadurch keinen Konakt mit dem Fördergut kommt. Insbesondere bei heißem Fördergut können so chemische Reaktionen des Fördergutes mit der Umgebungsatmosphäre verhindert werden. Durch die Abschirmung des Fördergutes mittels einer Abdeckung wird auch die Umbebungsbelastung z.B. durch Staub aus Feinanteilen im Fördergut verringert.

Das erfindungsgemäße Verfahren sieht vor, dass das Schutzgas zwischen der Abdeckung und der Förderanlage relativ zur Umgebung auf einem geringen Überdruck von 0,01 bis 0,4 bar, insbesondere 0,05 bis 0,1 bar, eingestellt wird, dass das Ansaugen von Umgebungsatmosphäre in die Förderanlage durch den thermisch bedingten Sog in der Förderanlage verhindert wird. Der thermisch bedingte Sog tritt vor allem bei Förderanlagen mit stärkerer Neigung und bei heißem Fördergut auf. Dadurch entsteht im gesamten Bereich der Förderanlage ein Sog, der z.B. Umgebungsluft ansaugen kann. Um diesen Lufteintrag sicher zu vermeiden, ist es nötig durch Schutzgaszufuhr den Sog weitgehend auszugleichen und den Zutritt von Umgebungsatmosphäre sicher zu unterbinden. Dazu ist es nötig einen zumindest geringen Überdruck des Schutzgases im Bereich der Förderanlage bzw. innerhalb der Abdeckung aufrecht zu erhalten und wobei überschüssiges Schutzgas über Dichtspalte aus der Fördereinrichtung zur Kühlung der Fördereinrichtung abgeleitet wird.

Nach einer möglichen Ausgestaltung des erfindungsgemäßen Verfahrens kommt als Schutzgas das Prozessgas einer Reduktionsanlage oder ein verbranntes Prozessgas einer Reduktionsanlage, ein Rauchgas aus einem metallurgischen Schmelzofen oder ein Inertgas, insbesondere Stickstoff, oder Mischungen davon zum Einsatz. Weiters können auch Mischungen der genannten Gase eingesetzt werden. Der Einsatz von Prozessgasen bietet den Vorteil, dass diese Gase sehr kostengünstig und in ausreichender Menge zur Verfügung gestellt werden können. Für den Fall, dass eine ausreichende Menge an Schutzgas nicht zur Verfügung stehen sollte, können auch zusätzliche Schutzgase wie z.B. Stickstoff verwendet werden.

Nachfolgend werden die anhand möglicher Ausgestaltungen näher beschrieben.
Fig. 1 zeigt die erfindungsgemäße Förderanlage in einer Schnittdarstellung quer zur Förderrichtung
Fig. 2 zeigt die erfindungsgemäße Förderanlage in einer schematischen Darstellung
Fig. 3 zeigt den erfindungsgemäßen Anlagenverbund in einer Übersicht
Fig. 4 zeigt den erfindungsgemäßen Anlagenverbund in einer schematischen Darstellung

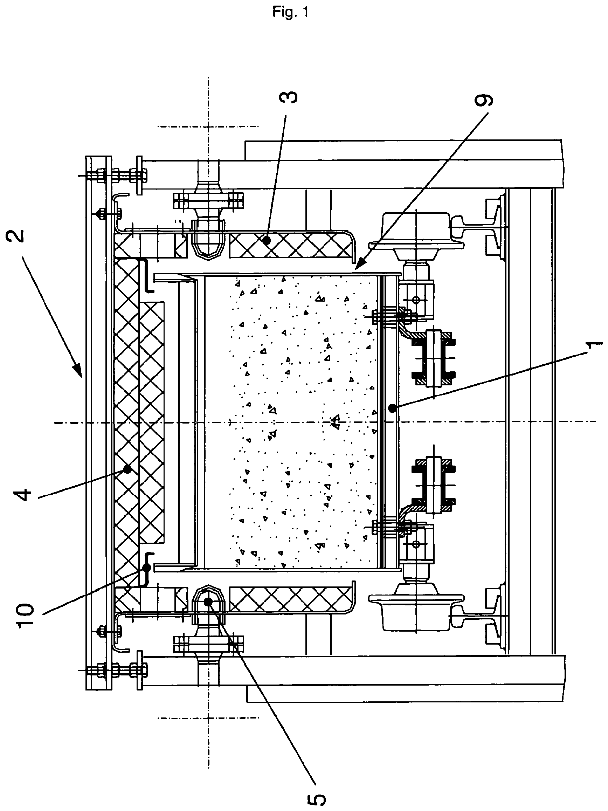

In Fig. 1 sind in einer Schnittdarstellung die wesentlichsten Bauteile dargestellt. Die Förderanlage weist Förderelemente 1 zur Aufnahme des zu transportierenden Fördergutes auf, die z.B. als Förderzellen oder -becher, wie sie von Zellen- oder Becherförderern bekannt sind, ausgeführt sein können. Die Förderbecher gleiten z.B. mittels Rädern auf Schienen, wobei die Becher über Ketten miteinander verbunden sein können. Oberhalb und seitlich der Förderelemente 1 ist die Abdeckung 2 gebildet aus seitlichen 3 und oberen gasdichten Wänden 4 angeordnet. Diese Wände weisen eine Wärmeisolation auf, die einerseits ein warmes Fördergut vor Abkühlung bewahren und andererseits eine Schutzfunktion für die umgebende Stahlkonstruktion hat. Des Weiteren vermeiden diese Wände eine übermäßige Belastung der Umgebung mit Staub und Abgasen.

Seitlich angeordnete Verteilerleitungen 5 durchdringen die seitlichen Wände 3, wobei die Verteilerleitungen 5 als gelochte oder perforierte Leitungen ein Schutzgas innerhalb der Wände verteilt. Durch die Spülung mit Schutzgas wird das Fördergut, vor allem, wenn es noch heiß ist und eine hohe Reaktivität mit Luft aufweist, vor ungewollten Reaktionen, insbesondere vor einer Oxidation, geschützt.

Die Verteilerleitungen 5 weisen an Ihren Ober- und Unterseiten Bohrungen und/oder Schlitze auf, die einen gerichteten Eintrag des Schutzgases sicherstellen. Durch diese Maßnahme wird vermieden, dass keine Staubentwicklung durch eine direkte Anströmung des Fördergutes erzeugt wird. Weiters wird eine sichere Spülung des Bereichs innerhalb der Abdeckungen sichergestellt. Durch die nach unten gerichtete Teilmenge an eingebrachtem Schutzgas, wird auch der Zutritt von Umgebungsatmosphäre unterbunden, da stets eine nach außen gerichtete Schutzgasmenge vorliegt.

Im Bereich der oberen Kante des Förderelementes 1 sind Drosselleisten 10 vorgesehen, die das Eindringen von Umgebungsatmosphäre in das Förderelement verhindert. Zusätzlich sind Dichtspalte 9 durch vorspringende Elemente im Bereich der unteren Seitenwände des Fördermittels 1 vorgesehen, die für eine Ableitung von überschüssigem Schutzgas und zur Kühlung der Anlage vorgesehen sind.

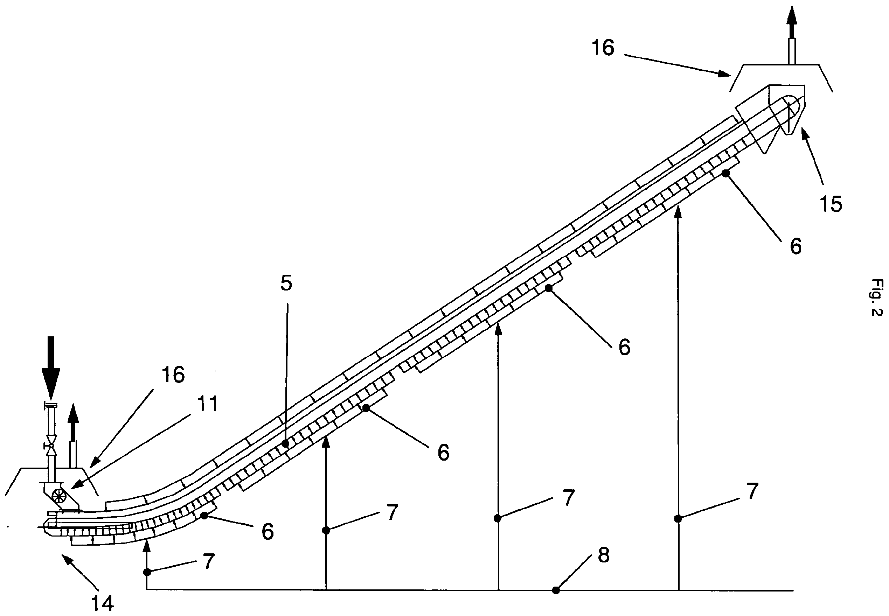

Fig. 2 zeigt die Förderanlage in einer möglichen Anordnung. Durch ein Förderorgan 11, das z.B. als Zellenradförderer ausgebildet sein kann, wird an der Aufgabestelle 14 das Fördergut auf die Förderanlage aufgebracht. Durch den Zellenradförderer ist eine mengengenaue Aufgabe auf die Förderelemente 1 möglich. Um die Staubbelastung im Bereich der Aufgabe- und der Abwurfstelle 14 und 15 zu minimieren sind Absaugeinrichtungen 16, insbesondere Injektorabsaugungen, vorgesehen. Zur Kühlung sind Absaugrohre derart angeordnet, dass mittels angesaugter Falschluft die abgesaugten Gase bzw. Stäube gekühlt werden können.

Die Zuleitung des Fördergutes weist zumindest ein Schieber- und ein Kugelventil auf, sodass das Förderorgan 11 abgesperrt werden kann. Das Förderorgan ist mittels Schutzgas spülbar, sodass auch in diesem Bereich das Fördergut wirksam vor Umgebungsatmosphäre geschützt werden kann. Im Bereich des Förderorgans 11 ist eine mit Schutzgas gespülte Schurre zur Aufgabe des Förderguts auf das Förderelement vorgesehen.

Die Förderanlage wird über eine zentrale Schutzgasversorgung 8 und separaten Versorgungsleitungen 7, die mit abschnittsweise zusammengefassten Zuleitungen 6 verbunden sind über die Verteilerleitungen 5 mit Schutzgas gespült. Aufgrund der abschnittsweisen Anordnung ist es möglich die Menge an Schutzgas der lokalen Situation anzupassen, also die Schutzgasmenge entsprechend anzupassen.

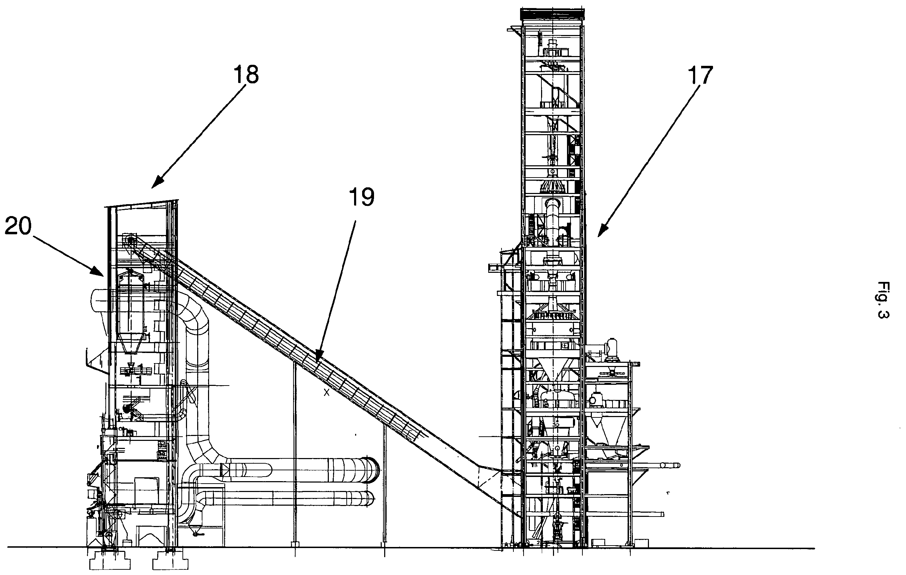

Fig. 3 zeigt in einem Überblick eine mögliche Anordnung des erfindungsgemäßen Anlagenverbundes. Eine Reduktionsanlage 17, wie z.B. eine Direktreduktionsanlage erzeugt ein Vorprodukt, wie z.B. heißes direkt reduziertes Eisen (HDRI) für ein nachgeordnetes Prozessaggregat, wie z.B. ein Elektrostahlwerk. Die beiden Anlagen sind über die erfindungsgemäße Förderanlage 19 miteinander verbunden, wobei auch erhebliche Höhenunterschiede überwunden werden. Das Vorprodukt kann noch in heißem Zustand direkt über die Förderanlage transportiert und dem Prozessaggregat zugeführt werden. Durch die erfindungsgemäße Abschirmung des Vorproduktes während des gesamten Transportes, ist es möglich ungewollte Reaktionen mit der Umgebungsatmosphäre zu vermeiden und die Umweltbelastung gering zu halten. Vor der weiteren Verarbeitung des Vorproduktes im Prozessaggregat wird das Vorprodukt in einer Puffereinrichtung 20, die zumeist über dem Prozessaggregat angeordnet ist zwischengespeichert. Um Wärmeverluste gering zu halten weist die Puffereinrichtung eine Wärmeisolierung auf.

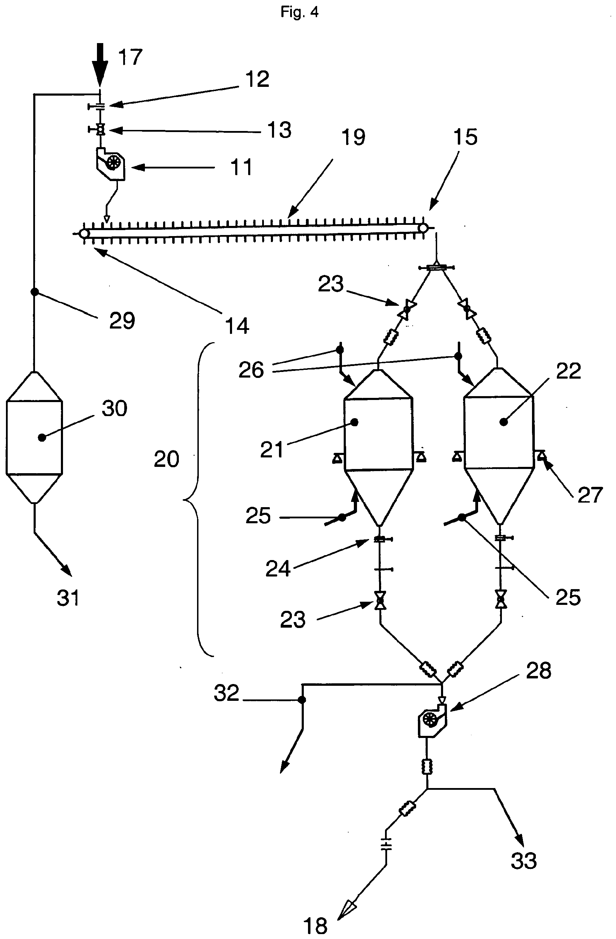

In Fig. 4 ist die Anlagensituation zwischen der Reduktionsanlage 17 und dem Prozessaggregat 18 dargestellt. Vorteilhafterweise weist die Puffereinrichtung 20 zwei Puffersilos 21, 22 zur Aufnahme des Vorproduktes auf. Diese können wechselweise chargiert bzw. entleert werden. Zum gasdichten Verschließen der Puffersilos 21 und 22 sind zumindest ein Absperrschieber 24 und ein Kugelventil 23 vorgesehen. Zum Spülen der Puffersilos 21 und 22 sind Anschlüsse 25 zum Einleiten von Schutzgas vorgesehen. Zusätzlich weisen die Puffersilos nicht dargestellte Entlüftungen zum Ableiten von Schutzgas auf. Weiters können Aufgabevorrichtungen 26 zum Eintragen von zusätzlichen Einsatzstoffen in die Puffersilos 21 und 22 vorgesehen werden. Die zu chargierenden Vorprodukte werden aus der Puffereinrichtung 20 über ein Förderorgan 28 geregelt in das Prozessaggregat 18 zur weiteren Verarbeitung eingebracht. Um eine stetige Verfolgung der Menge an Material in der Puffereinrichtung zu ermöglichen, sind Einrichtungen zur Gewichtserfassung 27 an allen Puffersilos 21, 22 vorgesehen.

Um bei Störfällen eine sichere Entleerung der Puffereinrichtung 20 zu ermöglichen, kann das gepufferte Material über eine Leitung (32 oder 33) auschargiert werden. Dabei kann auch ein Materialkühler nachgeschaltet werden.

Zusätzlich ist für einen Störfall eine Ableitung 29 für das Vormaterial aus der Reduktionsanlage 17 vorgesehen, wobei das heiße Vormaterial in einem Materialkühler 30 eingebracht werden kann, bevor es z.B. auf Halde gebracht wird.

## Patentansprüche

1. Becher- oder Zellenförderer, mit Förderelementen (1) zum Fördern von stückigem, heißem Fördergut, mit einer gasdichten Abdeckung (2) zur Abschirmung des Fördergutes **dadurch gekennzeichnet, dass** an zumindest einer Innenseite der Abdeckung (2) zumindest eine Verteilerleitung (5) zur Einleitung eines Schutzgases vorgesehen ist, sodass zur Vermeidung von eindringender Umgebungsatmosphäre der Raum in der Förderanlage und innerhalb der Abdeckung (2) mit Schutzgas spülbar ist, wobei die Abdeckung (2) seitliche (3) und obere (4) gasdichte Wände und die Verteilerleitungen (5) an Ihren Ober- und Unterseiten derart ausgebildeten Bohrungen und/ oder Schlitze aufweisen, dass das eingeleitete Schutzgas parallel zur seitlichen Abdeckung (3) nach oben und nach unten gerichtet, unter Ausbildung eines nach außen gerichteten Schutzgasstroms, eintritt, und wobei die Verteilerleitung (5) die seitlichen (3) gasdichten Wände der Abdeckung (2) durchdringt und die Abdeckung (2) gegenüber der Förderanlage Dichtspalte (9) aufweist, zur Ableitung von überschüssigem Schutzgas und zur Kühlung derFörderanlage.

2. Förderanlage nach Anspruch 1, **dadurch gekennzeichnet, dass** die Abdeckung (2) eine Wärmeisolation zur Verringerung der Abkühlung des Fördergutes aufweist.

3. Förderanlage nach einem der obigen Ansprüche, **dadurch gekennzeichnet, dass** die Verteilerleitungen (5) als gelochte oder perforierte Rohre, zur gleichmäßigen Verteilung des Schutzgases innerhalb der Abdeckung (2), ausgeführt sind.

4. Förderanlage nach einem der obigen Ansprüche, **dadurch gekennzeichnet, dass** eine Vielzahl an Verteilerleitungen (5) an der Förderanlage zumindest eine abschnittsweise gesondert regelbare Versorgung mit zumindest einem Schutzgas zulässt.

5. Förderanlage nach einem der obigen Ansprüche, **dadurch gekennzeichnet, dass** die Verteilerleitungen (5) über abschnittsweise zusammengefasste Zuleitungen (6), welche jeweils mit separaten Versorgungsleitungen (7) mit zumindest einer zentralen Schutzgasversorgung (8) in Verbindung stehen, mit Schutzgas beaufschlagbar sind.

6. Förderanlage nach einem der obigen Ansprüche, **dadurch gekennzeichnet, dass** die Förderanlage geneigt, insbesondere in einem Winkel von 10° bis 50°, vorzugsweise in einem Winkel von 20° bis 35° angeordnet ist.

7. Förderanlage nach einem der obigen Ansprüche, **dadurch gekennzeichnet, dass** über den Verteilerleitungen Drosselleisten (10) im Bereich des oberen Endes der Förderelemente (1), zur Vermeidung von eindringender Luft in das Förderelement (1) vorgesehen sind, wobei ein Spalt zwischen den Drosselleisten (10) und den Förderelementen (1) vorliegt.

8. Förderanlage nach einem der obigen Ansprüche, **dadurch gekennzeichnet, dass** zur gesteuerten Beschickung der Förderanlage ein Förderorgan (11), insbesondere ein Zellenradförderer oder eine Förderschnecke, vorgesehen ist, wobei vor Beschickung der Förderanlage mit Fördergut, das Förderorgan (11) mit Schutzgas zur Entfernung von Luftsauerstoff spülbar sind.

9. Förderanlage nach Anspruch 8, **dadurch gekennzeichnet, dass** unmittelbar vor dem Förderorgan (11) ein Absperrschieber (12) und ein nachfolgendes Kugelventil (13) zum Absperren des Förderorgans (11) vorgesehen sind.

10. Förderanlage nach Anspruch 8 oder 9, **dadurch gekennzeichnet, dass** das Förderorgan (11) eine mit Schutzgas spülbare Förderschurre zur Aufgabe des Fördergutes auf die Förderanlage umfasst.

11. Förderanlage nach einem der obigen Ansprüche, **dadurch gekennzeichnet, dass** das im Bereich der Aufgabe- (14) und/oder der Abwurfstellen (15) der Förderanlage Absaugungseinrichtungen (16), insbesondere Injektorabsaugungen, mit separaten Staubhauben zur Absaugung von Stäuben vorgesehen sind, wobei in den Staubhauben Absaugrohre derart angeordnet sind, dass auch Falschluft zur Kühlung der abgesaugten Gase bzw. Stäube angesaugt werden kann.

12. Anlagenverbund mit einer Reduktionsanlage (17) zur Reduktion von Oxiden in einem kontinuierlichen Prozess, insbesondere einer Direktreduktionsanlage, und einem Prozessaggregat (18) zur Herstellung von flüssigem Metall, insbesondere einem Elektro-Stahlwerk, in einem diskontinuierlichen Prozess, wobei das Reduktionsprodukt aus der Reduktionsanlage (17) dem Prozessaggregat (18) zuführbar ist, **dadurch gekennzeichnet, dass** eine Förderanlage (19) nach einem der Ansprüche 1 bis 13, für den Transport des Reduktionsproduktes aus der Reduktionsanlage (17) in zumindest eine Puffereinrichtung (20), zur Aufnahme des Reduktionsproduktes und/oder weiterer Einsatzstoffe und weiters zur Beschickung des Prozessaggregates (18), vorgesehen sind.

13. Anlagenverbund nach Anspruch 12, **dadurch gekennzeichnet, dass** die Puffereinrichtung (20) zumindest einen Puffersilo umfasst.

14. Anlagenverbund nach Anspruch 12 oder 13, **dadurch gekennzeichnet, dass** die Puffereinrichtung (20) zwei Puffersilos (21, 22) zur wechselweisen Beschickung bzw. Entleerung umfasst.

15. Anlagenverbund nach einem der Ansprüche 12 bis 14, **dadurch gekennzeichnet, dass** die Puffereinrichtung (20) eine Wärmeisolierung aufweist.

16. Anlagenverbund nach einem der Ansprüche 12 bis 15, **dadurch gekennzeichnet, dass** die Puffereinrichtung (20) zumindest ein Kugelventil (23) und/oder einen Absperrschieber (24) zum gasdichten Verschließen der Puffereinrichtung (20) aufweist.

17. Anlagenverbund nach einem der Ansprüche 12 bis 16, **dadurch gekennzeichnet, dass** die Puffereinrichtung (20) Anschlüsse (25) zur Spülung mit Schutzgas und/oder einem Kühlgas, insbesondere einem Inertgas, zur Kühlung in einem Störfall, aufweist.

18. Anlagenverbund nach einem der Ansprüche 12 bis 17, **dadurch gekennzeichnet, dass** an der Puffereinrichtung (20) eine Aufgabevorrichtung (26) für zusätzliche Einsatzstoffe vorgesehen ist.

19. Anlagenverbund nach einem der Ansprüche 12 bis 18, **dadurch gekennzeichnet, dass** die Puffereinrichtung (20) zumindest eine kontinuierliche Gewichtsmesseinrichtung (27) zur Erfassung des gepufferten Reduktionsproduktes und/oder der Einsatzstoffe aufweist.

20. Anlagenverbund nach einem der Ansprüche 12 bis 19, **dadurch gekennzeichnet, dass** die Puffereinrichtung (20) zumindest ein Förderorgan (28) zur geregelten Chargierung des Reduktionsproduktes und/oder der Einsatzstoffe in das Prozessaggregat (18) aufweist.

21. Anlagenverbund nach einem der Ansprüche 12 bis 20, **dadurch gekennzeichnet, dass** vor der Förderanlage (19) ein Austrag (29) für das Reduktionsprodukt vorgesehen ist, wobei dieser mit einem Materialkühler (30) zur Aufnahme und Kühlung des Reduktionsproduktes in Verbindung steht.

22. Verfahren zum Betrieb einem Becher- oder Zellenförderer gemäß Anspruch 1, mit Förderelementen zum Fördern von stückigem, heißem, Fördergut, mit einer Abdeckung zur Abschirmung des Fördergutes, wobei der Raum in der Förderanlage und innerhalb der Abdeckung mittels, über zumindest eine Verteilerleitung eingeleitetem Schutzgas, zur Vermeidung von eindringender Umgebungsatmosphäre, gespült wird, wobei das Schutzgas zwischen der Abdeckung und der Förderanlage relativ zur Umgebung auf einem geringen Überdruck von 0,01 bis 0,4 bar, insbesondere 0,05 bis 0,1 bar, eingestellt wird, sodass das Ansaugen von Umgebungsatmosphäre in die Förderanlage durch den thermisch bedingten Sog in der Förderanlage verhindert wird, und wobei überschüssiges Schutzgas über Dichtspalte aus der Fördereinrichtung zur Kühlung der Fördereinrichtung abgeleitet wird.

23. Verfahren nach Anspruch 22, **dadurch gekennzeichnet, dass** als Schutzgas das Prozessgas einer Reduktionsanlage oder ein verbranntes Prozessgas einer Reduktionsanlage, ein Rauchgas aus einem metallurgischen Schmelzofen oder ein Inertgas, insbesondere Stickstoff, oder Mischungen davon zum Einsatz kommt.

## Claims

1. Bucket conveyor or star feeder, with conveyor elements (1) for conveying pelletized, hot, material to be conveyed, having a gastight cover (2) for shielding the material to be conveyed, **characterized in that** at least one distributor line (5) for feeding in a protective gas is provided on at least one inner side of the cover (2) so that the space in the conveyor system and inside the cover (2) can be rinsed with protective gas in order to avoid ingressing the ambient atmosphere, wherein the cover (2) has lateral gastight walls (3) and upper gastight walls (4), and the distributor lines (5) have bore holes and/or slits on their upper sides and under sides, such that the protective gas is fed in directed upward and downward parallel to the lateral cover (3), in order to form an outward directed stream of protective gas, and wherein the distributor line (5) penetrates the lateral (3) gastight walls of the cover (2) and the cover (2) has sealing gaps (9) adjoining the conveyor system, in order to carry off excess protective gas and to cool the conveyor system.

2. Conveyor system according to Claim 1, **characterized in that** the cover (2) has heat insulation in order to reduce the cooling of the material to be conveyed.

3. Conveyor system according to one of the above claims, **characterized in that** the distributor lines (5) are embodied as perforated pipes in order to uniformly distribute the protective gas inside the cover (2).

4. Conveyor system according to one of the above claims, **characterized in that** a multiplicity of distributor lines (5) on the conveyor system permits at least one protective gas to be supplied in a way which can be regulated separately at least in certain areas.

5. Conveyor system according to one of the above claims, **characterized in that** the protective gas can be applied to the distributor lines (5) via feed lines (6) which are combined in certain sections and which are respectively connected to separate supply lines (7) with at least one central protective gas supply (8).

6. Conveyor system according to one of the above claims, **characterized in that** the conveyor system is arranged at an incline, in particular at an angle of 10° to 50°, preferably at an angle of 20° to 35°.

7. Conveyor system according to one of the above claims, **characterized in that** throttle ledges (10) are provided above the distributor lines in the region of the upper end of the conveyor elements (1) in order to avoid air penetrating the conveyor element (1), a gap being provided between the throttle ledges (10) and the conveyor elements (1).

8. Conveyor system according to one of the above claims, **characterized in that** the conveyor element (11), in particular a cell wheel conveyor or a conveyor worm is provided in order to charge the conveyor system in a controlled fashion, wherein, before the conveyor system is charged with material to be conveyed, the conveyor element (11) can be rinsed with protective gas in order to remove atmospheric oxygen.

9. Conveyor system according to Claim 8, **characterized in that** a master slide (12) is provided upstream of the conveyor element (11), and a ball valve (13) downstream thereof, in order to shut off the conveyor element (11).

10. Conveyor system according to Claim 8 or 9, **characterized in that** the conveyor element (11) comprises a conveyor chute, which can be rinsed with protective gas and has the purpose of feeding the material to be conveyed on to the conveyor system.

11. Conveyor system according to one of the preceding claims, **characterized in that** the extractor devices (16), in particular injector extractors with separate dust hoods for extracting dust, are provided in the region of the feeding in points (14) and/or ejection points (15) of the conveyor system, extractor pipes being arranged in the dust hoods in such a way that even secondary air can be sucked in in order to cool the extracted gases or dust particles.

12. Composite system havispng a reduction system (17) for reducing oxides in a continuous process, in particular a direct reduction system, and a process assembly (18) for manufacturing liquid metal, in particular an electric steel works, in a discontinuous process, wherein the reduction product can be fed from the reduction system (17) to the process assembly (18), **characterized in that** a conveyor system (19) according to one of claims 1 to 11 is provided for transporting the reduction product from the reduction system (17) into at least one buffer device (20) for receiving the reduction product and/or further starting materials and also for charging the process assembly (18) .

13. Composite system according to Claim 12, **characterized in that** the buffer device (20) comprises at least one buffer silo.

14. Composite system according to Claim 12 or 13, **characterized in that** the buffer device (20) comprises two buffer silos (21, 22) for alternately charging or emptying.

15. Composite system according to one of Claims 12 to 14, **characterized in that** the buffer device (20) has an insulating means.

16. Composite system according to one of Claims 12 to 15, **characterized in that** the buffer device (20) has at least one ball valve (23) and/or a master slide (24) for closing off the buffer device (20) in a gastight manner.

17. Composite system according to one of Claims 12 to 16, **characterized in that** the buffer device (20) has connections (25) for rinsing with protective gas and/or a cooling gas, in particular an inert gas, for cooling in the case of a fault.

18. Composite system according to one of Claims 12 to 17, **characterized in that** the feeding in device (26) for additional starting materials is provided on the buffer device (20).

19. Composite system according to one of Claims 12 to 18, **characterized in that** the buffer device (20) has at least one continuous weight measuring device (27) for measuring the buffered reduction products and/or the starting materials.

20. Composite system according to one of Claims 12 to 19, **characterized in that** the buffer device (20) has at least one conveyor element (28) for the regulated charging of the reduction product and/or the starting materials into the process assembly (18).

21. Composite system according to one of Claims 12 to 20, **characterized in that** a discharge (29) for the reduction product is provided upstream of the conveyor system (19), said discharge (29) being connected to a material cooler (30) for accommodating and cooling the reduction product.

22. Method for operating a bucket conveyor or star feeder according to Claim 1, having conveyor elements for feeding pelletized, hot, material to be conveyed, having a cover for shielding the material to be conveyed, wherein the space in the conveyor system and inside the cover is rinsed by means of a protective gas, introduced via at least one distributor line, in order to avoid ingressing ambient atmosphere, wherein the protective gas between the cover and the conveyor system is set, relative to the surroundings, to a slight excess pressure of 0.01 to 0.4 bar, in particular 0.05 to 0.1 bar, such that the sucking in of ambient atmosphere into the conveyor system is prevented by the thermally induced suction in the conveyor system, and wherein excess protective gas is discharged from the conveyor device via sealing gaps in order to cool the conveyor device.

23. Method according to Claim 22, **characterized in that** the process gas of a reduction system or a burnt process gas from a reduction system, a flue gas from a metallurgical smelting furnace or an inert gas, in particular nitrogen, or mixtures thereof are used as the protective gas.

## Revendications

1. Convoyeur à godets ou cellulaire, comprenant des éléments convoyeurs (1) pour le convoyage de matière à transporter chaude en morceaux, comprenant un recouvrement (2) étanche au gaz pour isoler la matière à transporter, **caractérisé en ce qu'**au moins une conduite de distribution (5) permettant l'introduction un gaz protecteur est prévue sur au moins un côté intérieur du recouvrement (2), de façon que l'espace dans l'installation de convoyage et à l'intérieur du recouvrement (2) puisse être balayé par un gaz protecteur afin d'éviter la pénétration de l'atmosphère extérieure, le recouvrement (2) étant pourvu de parois latérales (3) et supérieure (4) étanches au gaz et les conduites de distribution (5) comportant, au niveau de leurs côtés supérieur et inférieur, des alésages et/ou des fentes réalisé(e)s de façon que le gaz protecteur introduit entre parallèlement au recouvrement latéral (3), dirigé vers le haut et vers le bas, en formant un courant de gaz protecteur dirigé vers l'extérieur, et la conduite de distribution (5) traversant les parois latérales (3) étanches au gaz du recouvrement (2) et le recouvrement (2) présentant une fente d'étanchéité (9) par rapport à l'installation de convoyage pour évacuer l'excédent de gaz protecteur et pour refroidir l'installation de convoyage.

2. Installation de convoyage selon la revendication 1, **caractérisée en ce que** le recouvrement (2) présente une isolation thermique pour réduire le refroidissement de la matière à transporter.

3. Installation de convoyage selon l'une des revendications précédentes, **caractérisée en ce que** les conduites de distribution (5) sont exécutées en tant que tuyaux percés ou perforés permettant une distribution uniforme du gaz protecteur à l'intérieur du recouvrement (2).

4. Installation de convoyage selon l'une des revendications précédentes, **caractérisée en ce qu'**une pluralité de conduites de distribution (5) sur l'installation de convoyage permet au moins une alimentation, réglable séparément par section, avec au moins un gaz protecteur.

5. Installation de convoyage selon l'une des revendications précédentes, **caractérisée en ce que** les conduites de distribution (5) peuvent être alimentées en gaz protecteur par l'intermédiaire de conduites d'amenée (6) regroupées par section, qui sont connectées respectivement par des conduites d'alimentation séparées (7) à au moins une alimentation centrale en gaz protecteur (8).

6. Installation de convoyage selon l'une des revendications précédentes, **caractérisée en ce que** l'installation de convoyage est inclinée, notamment selon un angle de 10° à 50°, de préférence selon un angle de 20° à 35°.

7. Installation de convoyage selon l'une des revendications précédentes, **caractérisée en ce que** des bandes d'étranglement (10) sont prévues au-dessus des conduites de distribution dans la zone de l'extrémité supérieure des éléments convoyeurs (1), pour éviter la pénétration d'air dans l'élément convoyeur (1), un jeu existant entre les bandes d'étranglement (10) et les éléments convoyeurs (1).

8. Installation de convoyage selon l'une des revendications précédentes, **caractérisée en ce qu'**un organe de convoyage (11), notamment un alimentateur à roue cellulaire ou une vis sans fin, est prévu pour le chargement régulé de l'installation de convoyage, l'organe de convoyage (11) pouvant être balayé par un gaz protecteur pour éliminer l'oxygène de l'air avant le chargement de la matière à transporter sur l'installation de convoyage.

9. Installation de convoyage selon la revendication 8, **caractérisée en ce qu'**une vanne d'arrêt (12) suivie d'une vanne sphérique (13) permettant de fermer l'organe de convoyage (11) sont prévues immédiatement avant l'organe de convoyage (11).

10. Installation de convoyage selon la revendication 8 ou 9, **caractérisée en ce que** l'organe de convoyage (11) comprend une goulotte de convoyage, qui peut être balayée par un gaz protecteur, pour l'alimentation de la matière à transporter sur l'installation de convoyage.

11. Installation de convoyage selon l'une des revendications précédentes, **caractérisée en ce qu'**il est prévu, dans la zone des points d'alimentation (14) et/ou de déversement (15) de l'installation de convoyage, des dispositifs d'aspiration (16), notamment des aspirations à injecteur, avec des collecteurs de poussières séparés permettant d'aspirer les poussières, des tuyaux d'aspiration étant disposés dans les collecteurs de poussières de manière à permettre d'aspirer également de l'air parasite pour refroidir les gaz et/ou poussières aspirés.

12. Installation combinée comprenant une installation de réduction (17) pour la réduction d'oxydes dans un processus continu, notamment une installation de réduction directe, et une unité de traitement (18) pour la production d'un métal liquide, notamment une aciérie électrique, dans un processus discontinu, le produit de réduction issu de l'installation de réduction (17) pouvant être amené à l'unité de traitement (18), **caractérisée en ce qu'**une installation de convoyage (19) selon l'une des revendications 1 à 13 est prévue pour le transport du produit de réduction issu de l'installation de réduction (17) dans au moins un dispositif tampon (20), pour la réception du produit de réduction et/ou d'autres matières de charge et, en outre, pour le chargement de l'unité de traitement (18).

13. Installation combinée selon la revendication 12, **caractérisée en ce que** le dispositif tampon (20) comprend au moins un silo tampon.

14. Installation combinée selon la revendication 12 ou 13, **caractérisée en ce que** le dispositif tampon (20) comprend deux silos tampons (21, 22) permettant un chargement ou déchargement alterné.

15. Installation combinée selon l'une des revendications 12 à 14, **caractérisée en ce que** le dispositif tampon (20) présente une isolation thermique.

16. Installation combinée selon l'une des revendications 12 à 15, **caractérisée en ce que** le dispositif tampon (20) comporte au moins une vanne sphérique (23) et/ou une vanne d'arrêt (24) pour fermer le dispositif tampon (20) de manière étanche au gaz.

17. Installation combinée selon l'une des revendications 12 à 16, **caractérisée en ce que** le dispositif tampon (20) comporte des raccords (25) permettant un balayage avec un gaz protecteur et/ou un gaz de refroidissement, notamment un gaz inerte, pour le refroidissement en cas d'incident.

18. Installation combinée selon l'une des revendications 12 à 17, **caractérisée en ce qu'**un dispositif d'alimentation (26) pour des matières de charge supplémentaires est prévu au niveau du dispositif tampon (20).

19. Installation combinée selon l'une des revendications 12 à 18, **caractérisée en ce que** le dispositif tampon (20) comprend au moins un dispositif de pesée continue (27) pour la saisie du produit de réduction mis en silo tampon et/ou des matières de charge.

20. Installation combinée selon l'une des revendications 12 à 19, **caractérisée en ce que** le dispositif tampon (20) comprend au moins un organe de convoyage (28) pour le chargement régulé du produit de réduction et/ou des matières de charge dans l'unité de traitement (18).

21. Installation combinée selon l'une des revendications 12 à 20, **caractérisée en ce qu'**un point de déversement (29) pour le produit de réduction est prévu avant l'installation de convoyage (19), ce point étant connecté à un refroidisseur de matière (30) destiné à recevoir et à refroidir le produit de réduction.

22. Procédé de fonctionnement d'un convoyeur à godets ou cellulaire selon la revendication 1, comprenant des éléments convoyeurs pour le convoyage de matière à transporter chaude en morceaux, comprenant un recouvrement pour isoler la matière à transporter, l'espace dans l'installation de convoyage et à l'intérieur du recouvrement étant balayé au moyen d'un gaz protecteur introduit par l'intermédiaire d'au moins une conduite de distribution pour éviter la pénétration de l'atmosphère extérieure, la pression du gaz protecteur entre le recouvrement et l'installation de convoyage étant réglée en légère surpression de 0,01 bar à 0,4 bar, notamment de 0,05 bar à 0,1 bar, par rapport à l'extérieur, de manière à empêcher l'aspiration de l'atmosphère extérieure dans l'installation de convoyage, due à l'appel thermique dans l'installation de convoyage, et l'excédent de gaz protecteur étant évacué à l'extérieur du dispositif de convoyage par le biais de fentes d'étanchéité pour refroidir le dispositif de convoyage.

23. Procédé selon la revendication 22, **caractérisé en ce que** l'on utilise, en tant que gaz protecteur, le gaz de procédé d'une installation de réduction ou un gaz de procédé brûlé d'une installation de réduction, un gaz de fumée d'un four de fusion métallurgique ou un gaz inerte, notamment l'azote, ou des mélanges de ces gaz.
